# EUROPEAN PATENT APPLICATION

(11) **EP 4 760 946 A1**
(43) Date of publication of application: **17.06.2026**
(21) Application number: 24927475.4
(22) Date of filing: 12.11.2024
(51) Int. Cl.: H01M 50/383, H01M 50/342, H01M 50/249

(54) **BATTERY PACK AND VEHICLE INCLUDING SAME**

(30) Priority: 26.02.2024 KR 20240027391
(71) Applicant: LG Energy Solution, Ltd., Seoul 07335 (KR)
(72) Inventor: LEE, Joo-Hyoung, Daejeon 34122 (KR); KIM, Kwang-Mo, Daejeon 34122 (KR)
(74) Representative: Plasseraud IP
(86) International application number: PCT/KR2024/017864
(87) International publication number: WO 2025/183302

(57) **Abstract**

Disclosed are a battery pack and a vehicle including the same. A battery pack according to an embodiment of the present disclosure may include: a plurality of battery modules in which a plurality of battery cells are stacked; a pack case configured to store the plurality of battery modules and having a venting unit formed therein; and a protective cover member coupled to the pack case at a portion where the venting unit is located to protect the venting unit.

## Description

### TECHNICAL FIELD

This application is based on and claims priority from Korean Patent Application No. 10-2024-0027391, filed on February 26, 2024, with the Korean Intellectual Property Office, the disclosure of which is incorporated herein in its entirety by reference.

The present disclosure relates to a battery pack and a vehicle including the same, and more specifically, to a battery pack capable of protecting a venting unit and facilitating discharge of venting gas, and a vehicle including the same.

### BACKGROUND ART

In general, secondary batteries refer to batteries capable of being repeatedly charged and discharged, such as lithium-ion batteries, lithium-polymer batteries, nickelcadmium batteries, nickel-hydrogen batteries, nickel-zinc batteries, and the like. A battery cell, which is the most fundamental secondary battery, may provide an output voltage of approximately 2.5V to 4.2V.

Recently, the secondary batteries have been applied to devices that require high output voltage and a large amount of charging capacity, such as electric vehicles or ESSs (Energy Storage Systems), and accordingly, a battery module configured by connecting multiple battery cells in series, parallel, or a combination thereof, and a battery pack configured by connecting the battery modules above in series, parallel, or a combination thereof are widely used.

Although lithium secondary batteries are currently in the spotlight due to their advantages such as high operating voltage and significantly high energy density, since they use organic electrolytes, if the lithium secondary batteries are overcharged, it may cause overcurrent and overheating, leading to explosion or fire in the worst cases.

Various types of secondary batteries may include a battery module having a module case, capable of protecting battery cells, in which a plurality of battery cells are stacked and stored in the module case, and a battery pack including the plurality of battery modules.

Here, if venting gas is generated due to flame occurring in at least one of the battery cells inside the module case of the battery module, the internal pressure of the battery module rapidly increases, and the flame may spread to neighboring battery modules due to the explosion of the battery module, leading to a chain reaction of ignition.

**In** addition, if flame generated from a battery module spreads to a neighboring battery module, the battery module or battery pack may be damaged, burned out, or exploded due to a chain reaction of the flame, making it difficult to secure the stability of the battery module or battery pack. Furthermore, venting gas is generated from the battery cells inside the battery module, which may causes various problems when discharged in an undesirable direction.

**In** order to solve the problems above, a venting unit may be provided in a pack case of the battery pack, thereby smoothly discharging the venting gas.

However, since the venting unit of the conventional battery pack is exposed to the outside, when high-temperature particles are generated due to flame caused by a thermal event, the high-temperature particles move to the venting unit and damage the venting unit.

### DISCLOSURE

### Technical Problem

The present disclosure is designed to solve the problems of the related art, and therefore the present disclosure is directed to providing a battery pack capable of protecting the venting unit from high-temperature particles generated due to flame, and a vehicle including the same.

In addition, the present disclosure is to provide a battery pack capable of smoothly discharging venting gas by allowing the venting gas to pass through while blocking the high-temperature particles, and a vehicle including the same.

In addition, the present disclosure is to provide a battery pack that prevents pressure from increasing inside the battery pack, thereby preventing thermal runaway, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery modules in which a plurality of battery cells are stacked; a pack case configured to store the plurality of battery modules and having a venting unit formed therein; and a protective cover member coupled to the pack case at a portion where the venting unit is located to protect the venting unit and having a gas transfer hole through which venting gas moves.

In an embodiment, the venting unit may include: a venting hole through which venting gas generated from the battery cells is discharged; and a venting valve configured to close the venting hole and open when an internal pressure of the pack case exceeds a predetermined value.

In an embodiment, the protective cover member may be formed to cover at least a portion of the venting unit.

In an embodiment, the protective cover member may include: an upper cover portion located at a top; a side cover portion coupled to the upper cover portion and located at a side; and a front cover portion coupled to the upper cover portion and the side cover portion, and the gas transfer hole may be formed in at least one of the upper cover portion, the side cover portion, and the front cover portion.

In an embodiment, the front cover portion may include a plurality of rod portions, and the plurality of rod portions may be coupled to the side cover portion so as to be inclined, so that the gas transfer hole may be formed between the plurality of rod portions.

In an embodiment, each of the plurality of rod portions may have a lower side coupled to an end of the side cover portion and an upper side coupled to an inner side of the side cover portion.

In an embodiment, the gas transfer hole may be formed between one of the plurality of rod portions and a rod portion adjacent thereto so that the venting gas moves upward along the gas transfer hole.

In an embodiment, each of the plurality of rod portions may have an upper side coupled to an end of the side cover portion and a lower side coupled to an inner side of the side cover portion.

In an embodiment, the gas transfer hole may be formed between one of the plurality of rod portions and a rod portion adjacent thereto so that the venting gas moves downward along the gas transfer hole.

In an embodiment, inclination angles of the plurality of rod portions may be configured to be the same.

In an embodiment, at least one inclination angle of the plurality of rod portions may be configured differently.

In an embodiment, a coupling portion may be formed on the upper cover portion so that the protective cover member is coupled to the pack case.

In an embodiment, the protective cover member may further include a lower cover portion positioned at a lower portion so as to be coupled to lower portions of the side cover portion and the front cover portion.

In an embodiment, a gas transfer hole through which venting gas moves may be formed in the lower cover portion.

In another aspect of the present disclosure, there is provided a vehicle including at least one battery pack described above.

### Advantageous Effects

The embodiments of the present disclosure have the effect of protecting the venting unit from high-temperature particles generated by flames.

In addition, the embodiments of the present disclosure have the effect of smoothly discharging the venting gas by allowing the venting gas to pass through while blocking the high-temperature particles.

In addition, the embodiments of the present disclosure have the effect of preventing pressure from increasing inside the battery pack, thereby preventing thermal runaway.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery pack according to a first embodiment of the present disclosure.
FIG. 2 is a drawing illustrating a protective cover member protecting a venting unit formed in a pack case of a battery pack according to a first embodiment of the present disclosure, from which a battery module is omitted.
FIG. 3 is a drawing illustrating the protective cover member in a separated state in FIG. 2.
FIG. 4 is an enlarged view of a venting hole of the venting unit in FIG. 3.
FIG. 5 is a perspective view of a protective cover member in a battery pack according to a first embodiment of the present disclosure.
FIG. 6 is a front view of a protective cover member in a battery pack according to a first embodiment of the present disclosure.
FIG. 7 is a cross-sectional view taken along line A-A' in FIG. 5.
FIG. 8 is a perspective view of a protective cover member in a battery pack according to a second embodiment of the present disclosure.
FIG. 9 is a cross-sectional view taken along line B-B' in FIG. 8.
FIG. 10 is a perspective view of a protective cover member in a battery pack according to a third embodiment of the present disclosure.
FIG. 11 is a perspective view of a protective cover member in a battery pack according to a fourth embodiment of the present disclosure.
FIG. 12 is a perspective view of a protective cover member in a battery pack according to a fifth embodiment of the present disclosure.
FIG. 13 is a drawing illustrating a vehicle including a battery pack according to respective embodiments of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

In this specification, the expression "an element is 'connected' or 'coupled' to another element" should be understood that the elements may be directly connected or coupled to each other and that the two elements may be indirectly connected or coupled to each other through a connection member therebetween.

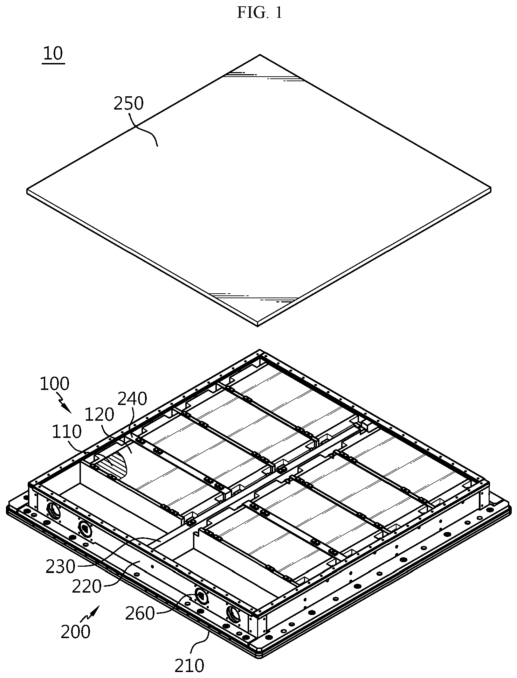

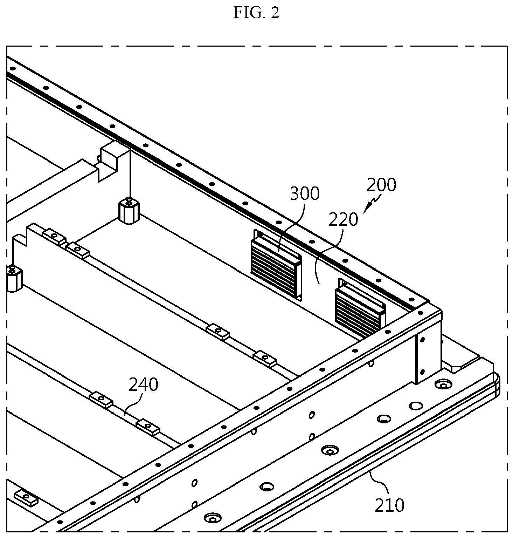

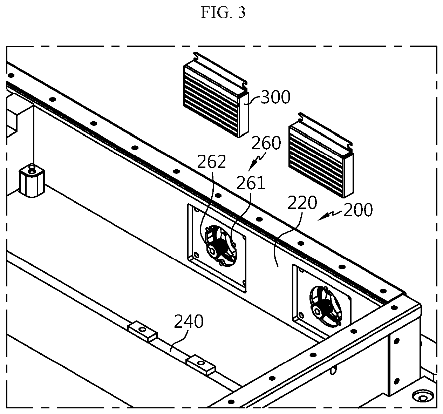

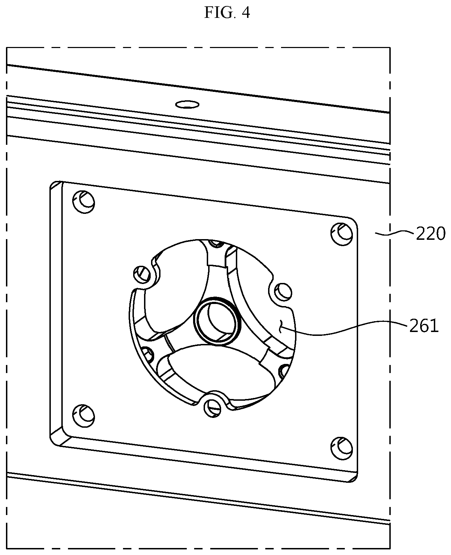

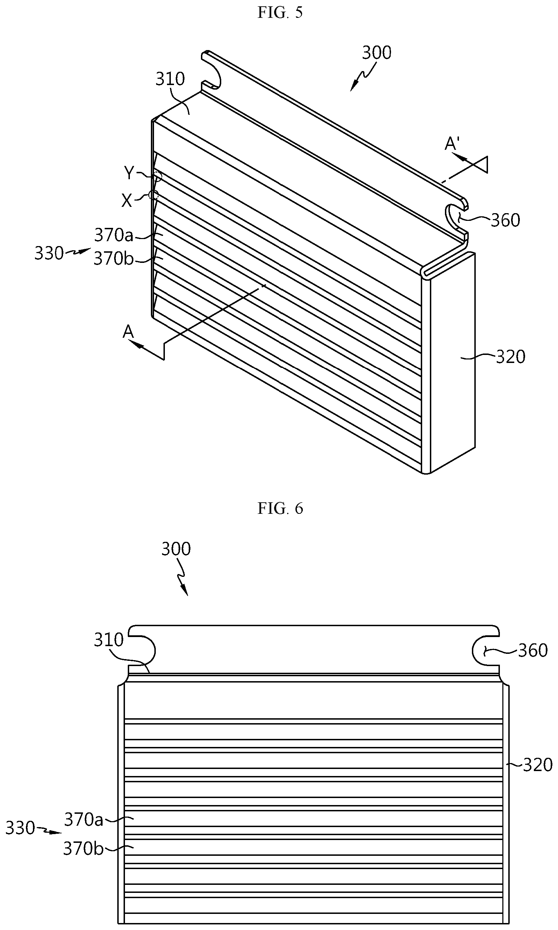

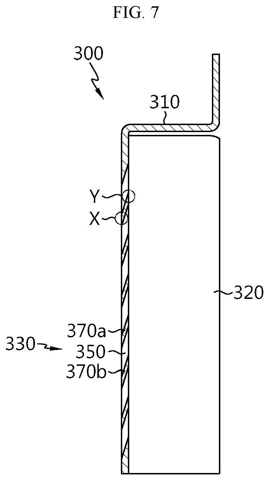

FIG. 1 is a perspective view of a battery pack according to a first embodiment of the present disclosure, FIG. 2 is a drawing illustrating a protective cover member protecting a venting unit formed in a pack case of a battery pack according to a first embodiment of the present disclosure, from which a battery module is omitted, FIG. 3 is a drawing illustrating the protective cover member in a separated state in FIG. 2, FIG. 4 is an enlarged view of a venting hole of the venting unit in FIG. 3, FIG. 5 is a perspective view of a protective cover member in a battery pack according to a first embodiment of the present disclosure, FIG. 6 is a front view of a protective cover member in a battery pack according to a first embodiment of the present disclosure, and FIG. 7 is a cross-sectional view taken along line A-A' in FIG. 5.

Referring to both FIG. 1 and FIG. 2, a battery pack 10 according to a first embodiment of the present disclosure may be configured to include a plurality of battery modules 100, a pack case 200, and a protective cover member 300.

Each battery module 100 is provided with a plurality of battery cells 110 stacked (see FIG. 1), and a plurality of battery modules 100 are arranged in various ways. For example, the battery modules 100 may be arranged in horizontal and vertical directions as shown in FIG. 1, but are not limited thereto.

The battery module 100 may be provided with a plurality of battery cells 110 and a module case 120.

The plurality of battery cells 110 may be stacked on each other. The battery cells 110 may have various structures, and the plurality of battery cells 110 may be stacked in various ways.

The battery cell 110 may have a structure in which a plurality of unit cells, configured as positive electrode plate-separator-negative electrode plate sequentially laminated, or a plurality of bi-cells, configured as positive electrode plate-separator-negative electrode plate-separator-positive electrode plate-separator-negative electrode plate sequentially laminated, are stacked depending on the battery capacity.

The battery cell 110 may be provided with an electrode lead. The electrode lead is a kind of terminal exposed to the outside and connected to an external device, and may be made of a conductive material. The electrode lead may include a positive electrode lead and a negative electrode lead.

The positive electrode lead and the negative electrode lead may be disposed in opposite directions along the longitudinal direction of the battery cell 110, or the positive electrode lead and the negative electrode lead may be positioned in the same direction along the longitudinal direction of the battery cell 110.

The battery cell 110 may have a plurality of cartridges (not shown) that receive the battery cell 110. Each cartridge (not shown) may be manufactured by plastic-injection molding, and a plurality of cartridges (not shown) having a storage portion capable of storing the battery cell 110 may be stacked. A cartridge assembly configured as a plurality of cartridges (not shown) stacked may be provided with connector elements or terminal elements.

The connector elements may include various types of electrical connection parts or connection members to be connected to, for example, a BMS (Battery Management System) (not shown) capable of providing data about the voltage or temperature of the battery cell 110.

In addition, the terminal elements include a positive electrode terminal and a negative electrode terminal as main terminals connected to the battery cell 110. The terminal element may have a terminal bolt to be electrically connected to the outside. Meanwhile, the battery cell 110 may have various shapes.

A plurality of battery cells 110 are stacked and stored in the module case 120. The module case 120 surrounds the plurality of battery cells 110, thereby protecting the battery cells 110 from external vibrations or impacts.

The module case 120 may be formed in a shape corresponding to the shape of a stack configured as the plurality of battery cells 110 stacked. For example, if the stack configured as the plurality of battery cells 110 stacked is formed in the shape of a hexahedron, the module case 120 may also be formed in the shape of a hexahedron corresponding thereto, but is not limited thereto. Here, the module case 120 may include an upper module case, a lower module case, and a side module case.

In addition, the module case 120 may be manufactured by, for example, bending a metal plate, so that the module case 120 may be configured in an integral form. If the module case 120 is manufactured in an integral form, the coupling process may be easy and simplified. Alternatively, the module case 120 may be provided as separate parts and then coupled to each other by welding or the like. However, the material of the module case 120 is not limited to a metal material.

Referring to FIG. 1, a plurality of battery modules 100 are stored in the pack case 200. Although the battery module 100 including a pouch-type battery cell 110 is stored in the pack case 200 in FIG. 1, the present disclosure is not limited thereto, and a battery module 100 including a prismatic battery cell or a battery module 100 including a cylindrical battery cell may also be stored inside the pack case 200 of the battery pack 10 according to the first embodiment of the present disclosure.

In addition, referring to FIG. 3, a venting unit 260 is provided in the pack case 200. The venting unit 260 is intended to discharge venting gas generated from the battery cell 110 to the outside of the battery pack 10. For example, if a flame occurs in any battery cell 110, venting gas may be generated. The venting gas generated above may be discharged to the outside of the pack case 200 through the venting unit 260.

The venting unit 260 may include a venting hole 261 and a venting valve 262. Referring to FIG. 4, the venting hole 261 is a hole through which venting gas generated from the battery cell 110 is discharged, and may be formed in the pack case 200, for example, on the side frame 220, but is not limited thereto.

In addition, referring to FIG. 3, a venting valve 262 may be installed in the venting hole 261. The venting valve 262 may be configured in various ways. For example, the venting valve 262 may be configured to close the venting hole 261 and to open when the internal pressure of the pack case 200 exceeds a predetermined value.

That is, the venting valve 262 normally blocks the venting hole 261, but when the venting gas leaks from the battery cell 110 and thus when the internal pressure of the pack case 200 exceeds a predetermined value or range, the venting valve 262 opens, so that the venting gas is discharged from the pack case 200 through the venting hole 261.

In the battery pack 10 according to the first embodiment of the present disclosure, the venting unit 260 is protected from flame or high-temperature particles by the protective cover member 300, which will be described in detail later.

Referring to FIG. 1, the pack case 200 may be configured to include, for example, a lower frame 210, a side frame 220, an inner frame 230, a partition frame 240, and an upper frame 250.

The lower frame 210 is configured so that a plurality of battery modules 100 are seated thereon. The lower frame 210 may be formed in the shape of a square plate, but is not limited thereto. The lower frame 210 forms the bottom of the pack case 200.

The side frame 220 may be configured to extend upward from the edge of the lower frame 210. The side frame 220 defines the height of the pack case 200 and forms a preset space between the same and the lower frame 210. In addition, a plurality of battery modules 100 are provided in the space between the side frame 220 and the lower frame 210. The side frame 220 may include a long side frame having a longer length and a short side frame having a shorter length. Alternatively, the lengths of the side frames 220 may be the same.

The inner frame 230 extends upward inside the lower frame 210 and is connected to the side frame 220. One or more inner frames 230 may be provided, and a plurality of battery modules 100 may be disposed to face each other, based on the inner frame 230.

The partition frame 240 is coupled to the inner frame 230. In addition, the partition frame 240 is interposed between the plurality of battery modules 100. Although one partition frame 240 is disposed between two adjacent battery modules 100 in FIG. 1, the present disclosure is not limited thereto.

The upper frame 250 may be positioned at a top and coupled to the side frame 220. The upper frame 250 may be coupled in various ways, for example, by a fastening member such as a bolt, by welding, or by another coupling method.

Referring to both FIGS. 2 and 3, the protective cover member 300 is coupled to the pack case 200 at a portion where the venting unit 260 is located in order to protect the venting unit 260.

Here, referring to FIGS. 5 to 7, a gas transfer hole 350 (see FIG. 7) through which the venting gas moves is formed in the protective cover member 300.

That is, the venting gas generated from the battery cell 110 may move to the venting unit 260 through the gas transfer hole 350 of the protective cover member 300 and be discharged through the venting hole 261 of the venting unit 260, but the flame generated from the battery cell 110 and the high-temperature particles generated by the flame may be blocked by the protective cover member 300 and are unable to move to the venting unit 260, so that the venting unit 260 may be protected from the flame or high-temperature particles.

The protective cover member 300 may be formed to cover at least a portion of the venting unit 260. That is, the protective cover member 300 may have a portion covering the venting unit 260, which varies as needed.

In addition, referring to both FIG. 5 and FIG. 7, the protective cover member 300 may be configured to include an upper cover portion 310, a side cover portion 320, and a front cover portion 330.

The upper cover portion 310 is located at the top and is coupled to the side cover portion 320. In addition, the side cover portion 320 is located at the side and is coupled to the upper cover portion 310 and the front cover portion 330. The front cover portion 330 is located at the front and is coupled to the upper cover portion 310 and the side cover portion 320.

Here, the protective cover member 300 may further include a lower cover portion 340, which will be described in a fifth embodiment below. However, in the first embodiment, the protective cover member 300 includes the upper cover portion 310, the side cover portion 320, and the front cover portion 330, but does not include a lower cover portion 340. That is, since the bottom of the protective cover member 300 is open, the venting gas may also move to the venting unit 260 through the lower cover portion 340.

In addition, the gas transfer hole 350 may be formed in at least one of the upper cover portion 310, the side cover portion 320, and the front cover portion 330. The case where the gas transfer hole 350 is formed in the side cover portion 320 and upper cover portion 310 will be described in a third embodiment and a fourth embodiment below, respectively, and the first embodiment discloses the case where the gas transfer hole 350 is formed in the front cover portion 330.

That is, referring to FIG. 7, the lower cover portion 340 is not formed in the protective cover member 300, and the gas transfer hole 350 is formed only in the front cover portion 330.

Referring to FIGS. 5 to 7, the front cover portion 330 may include a plurality of rod portions 370a and 370b. Here, the plurality of rod portions 370a and 370b may be formed to be inclined, and may be coupled to the side cover portion 320. In addition, the gas transfer hole 350 is formed between the plurality of rod portions 370a and 370b formed to be inclined.

Referring to both FIG. 5 and FIG. 7, each rod portion 370 among the plurality of rod portions 370a and 370b may have a lower side coupled to an end of the side cover portion 320 (see X in FIG. 5 and FIG. 7) and an upper side coupled to an inner side of the side cover portion 320 (see Y in FIG. 5 and FIG. 7). In addition, the plurality of rod portions 370a and 370b may have a gap formed therebetween, so that a gas transfer hole 350 may be formed between one rod portion 370a, among the plurality of rod portions 370a and 370b, and an adjacent rod portion 370b.

In addition, according to the structure above, each of the plurality of rod portions 370a and 370b is formed to be inclined upward in a direction toward the venting unit 260, and thus, the venting gas moves upward along the gas transfer hole 350 as it goes toward the venting unit 260.

Referring to FIG. 7, the plurality of rod portions 370a and 370b are spaced a predetermined distance apart from each other and are formed to be inclined upward in a direction toward the venting unit 260, so the venting gas may move along the plurality of rod portions 370a and 370b to the venting unit 260 and then be discharged to the outside of the pack case 200, whereas the high-temperature particles generated from the flame collide with the plurality of rod portions 370a and 370b and are blocked from moving to the venting unit 260.

That is, the structure and operation above enable the venting gas to pass through the gas transfer hole 350 between the plurality of rod portions 370a and 370b to be smoothly discharged, but block the high-temperature particles passing through the protective cover member 300, so that the venting unit 260 may be protected from the high-temperature particles generated dur to the flame, and venting of the gas may also be facilitated.

In addition, since the venting gas is smoothly discharged while protecting the venting unit 260 according to the above configuration, there is an effect of preventing pressure from increasing inside the battery pack 10 due to the venting gas, thereby preventing thermal runaway.

Here, as shown in FIG. 7, the inclination angles of the plurality of rod portions 370a and 370b may all be configured to be the same. Alternatively, as a modified embodiment, although not shown in the drawing, at least one inclination angle of the plurality of rod portions 370a and 370b may be formed differently.

In addition, referring to FIG. 5 and FIG. 6, a coupling portion 360 may be formed in the upper cover portion 310 so that the protective cover member 300 is able to be coupled to the pack case 200. A fastening member such as a bolt may be coupled to the coupling portion 360, so that the protective cover member 300 may be coupled to the pack case 200.

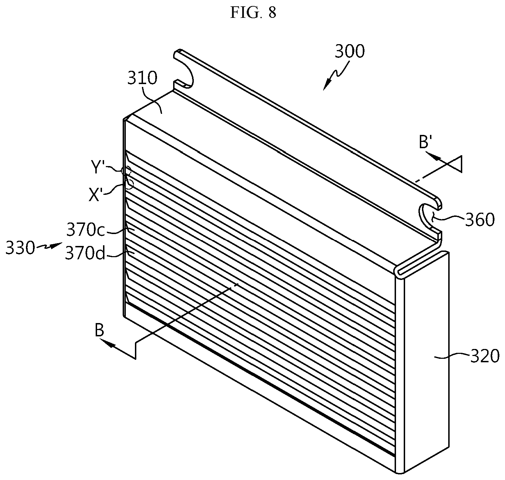

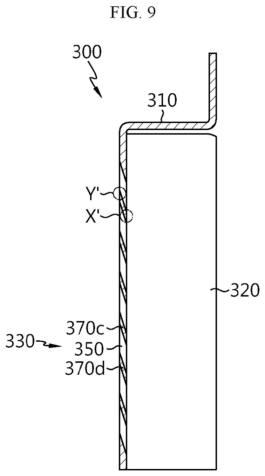

FIG. 8 is a perspective view of a protective cover member in a battery pack according to a second embodiment of the present disclosure, and FIG. 9 is a cross-sectional view taken along line B-B' in FIG. 8.

The second embodiment of the present disclosure is different in the inclination direction of a plurality of rod portions 370c and 370d in the front cover portion 330 from the first embodiment. However, some descriptions of the first embodiment, which are common with the second embodiment, will also be applied to the second embodiment. In addition, some descriptions of the second embodiment, which are applicable to the first embodiment, may be applied to the first embodiment.

Referring to FIGS. 8 and 9, the front cover portion 330 may include a plurality of rod portions 370c and 370d. Here, the plurality of rod portions 370c and 370d may be formed to be inclined and coupled to the side cover portion 320. In addition, a gas transfer hole 350 is formed between the plurality of rod portions 370c and 370d formed to be inclined.

Referring to both FIGS. 8 and 9, each rod portion 370 among the plurality of rod portions 370c and 370d may have an upper side coupled to an end of the side cover portion 320 (see X' in FIG. 8 and FIG. 9) and a lower side coupled to an inner side of the side cover portion 320 (see Y' in FIG. 8 and FIG. 9). In addition, the plurality of rod portions 370c and 370d may have a gap formed therebetween, so that a gas transfer hole 350 may be formed between one rod portion 370c, among the plurality of rod portions 370c and 370d, and an adjacent rod portion 370d.

**In** addition, according to the structure above, each of the plurality of rod portions 370c and 370d is formed to be inclined downward in a direction toward the venting unit 260, and thus, the venting gas moves downward along the gas transfer hole 350 as it goes toward the venting unit 260.

Referring to FIG. 9, the plurality of rod portions 370c and 370d are spaced a predetermined distance apart from each other and are formed to be inclined downward in a direction toward the venting unit 260, so the venting gas may move along the plurality of rod portions 370c and 370d to the venting unit 260 and then be discharged to the outside of the pack case 200, whereas the high-temperature particles generated from the flame collide with the plurality of rod portions 370c and 370d and are blocked from moving to the venting unit 260.

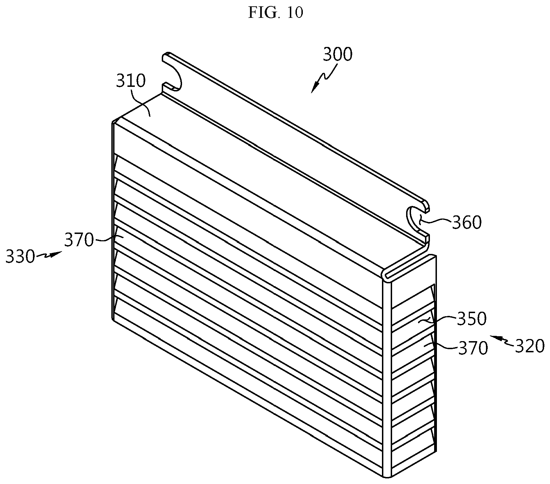

FIG. 10 is a perspective view of a protective cover member in a battery pack according to a third embodiment of the present disclosure.

The third embodiment of the present disclosure is different from the first embodiment and the second embodiment in that a gas transfer hole 350 is formed in the side cover portion 320. However, some descriptions of the first and second embodiments, which are common with the third embodiment, will also be applied to the third embodiment. In addition, some descriptions of the third embodiment, which are applicable to the first and second embodiments, may be applied to the first and second embodiments.

Referring to FIG. 10, a gas transfer hole 350 is formed in the side cover portion 320. Here, the gas transfer hole 350 formed in the side cover portion 320 may be configured to be inclined upward in a direction toward the venting unit 260, or may be configured to be inclined downward in a direction toward the venting unit 260.

In addition, as shown in FIG. 10, the gas transfer hole 350 may be formed in both the front cover portion 330 and the side cover portion 320, but the gas transfer hole 350 may be formed only in the side cover portion 320.

Alternatively, the gas transfer hole 350 may be formed in a pair of side cover portions 320, respectively, or the gas transfer hole 350 may be formed in only one of the pair of side cover portions 320.

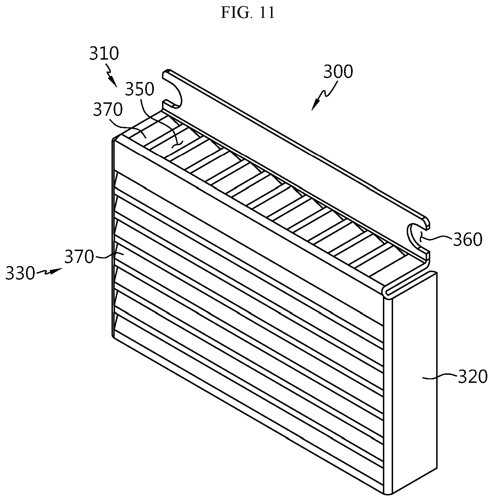

FIG. 11 is a perspective view of a protective cover member in a battery pack according to a fourth embodiment of the present disclosure.

The fourth embodiment of the present disclosure is different from the first to third embodiments in that a gas transfer hole 350 is formed in the upper cover portion 310. However, some descriptions of the first to third embodiments, which are common with the fourth embodiment, will also be applied to the fourth embodiment. In addition, some descriptions of the fourth embodiment, which are applicable to the first to third embodiments, may be applied to the first to third embodiments.

Referring to FIG. 11, a gas transfer hole 350 is formed in the upper cover portion 310. Here, the gas transfer hole 350 formed in the upper cover portion 310 may be configured to be inclined to the right toward the venting unit 260, or may be formed to be inclined to the left toward the venting unit 260. In addition, the gas transfer hole 350 formed in the upper cover portion 310 may be configured to be inclined not only to the right or left, but also to the inside or outside.

In addition, the gas transfer hole 350 may be formed in both the front cover portion 330 and the upper cover portion 310 as shown in FIG. 11, but the gas transfer hole 350 may be formed only in the upper cover portion 310.

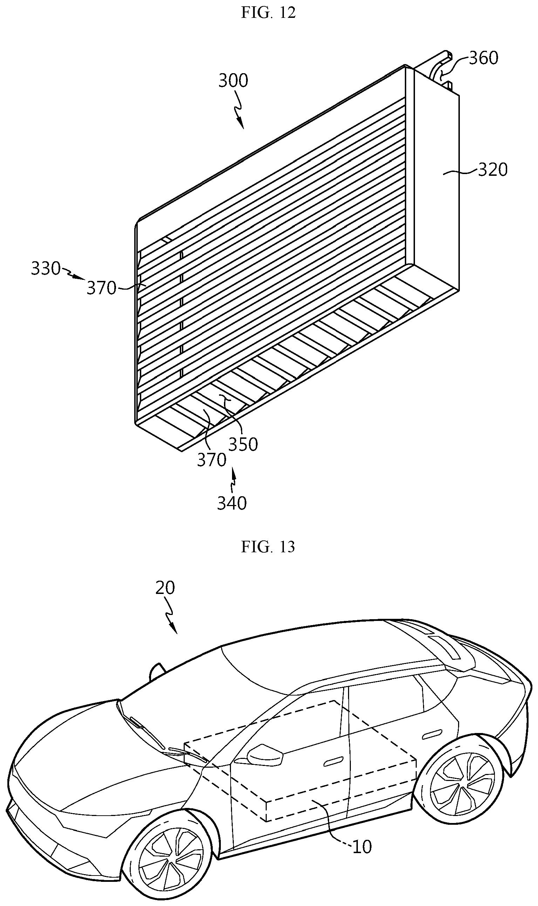

FIG. 12 is a perspective view of a protective cover member in a battery pack according to a fifth embodiment of the present disclosure.

The fifth embodiment of the present disclosure is different from the first to fourth embodiments in that a lower cover portion 340 is included in the protective cover member 300 and in that a gas transfer hole 350 is formed in the lower cover portion 340. However, some descriptions of the first to fourth embodiments, which are common with the fifth embodiment, will also be applied to the fifth embodiment. In addition, some descriptions of the fifth embodiment, which are applicable to the first to fourth embodiments, may be applied to the first to fourth embodiments.

Referring to FIG. 12, the protective cover member 300 may further include a lower cover portion 340 positioned at the bottom so as to be coupled to the lower portions of the side cover portion 320 and the front cover portion 330.

The lower cover portion 340 blocks high-temperature particles rising from below. Most high-temperature particles move beyond the inner frame 230 and the partition frame 240 to enter the venting unit 260 through the front, top, and sides of the venting unit 260. However, high-temperature particles may also enter the venting unit 260 from the lower side of the venting unit 260 depending on necessity or the model of the battery pack, so a lower cover portion 340 may be formed in the protective cover member 300.

Here, the lower cover portion 340 may not have a gas transfer hole 350. Alternatively, as shown in FIG. 12, a gas transfer hole 350 through which gas moves may be formed in the lower cover portion 340. In the case where the gas transfer hole 350 is formed in the lower cover portion 340, the gas transfer hole 350 formed in the lower cover portion 340 may be configured to be inclined to the right toward the venting unit 260, or may be configured to be inclined to the left toward the venting unit 260. In addition, the gas transfer hole 350 formed in the upper cover portion 310 may be configured to be inclined not only to the right or left, but also to the inside or outside.

In addition, the gas transfer hole 350 may be formed in both the front cover portion 330 and the lower cover portion 340 as shown in FIG. 12, but the gas transfer hole 350 may be formed only in the lower cover portion 340.

FIG. 13 is a drawing illustrating a vehicle including a battery pack according to respective embodiments of the present disclosure.

Referring to FIG. 13, a vehicle 20 according to an embodiment of the present disclosure may include one or more battery packs 10 according to the respective embodiments described above. Here, the vehicle 20 includes various vehicles designed to use electricity, such as an electric vehicle or a hybrid vehicle.

Although terms indicating directions such as up, down, left, and right are used in this specification, it is obvious to those skilled in the art to which the present disclosure pertains that these terms are only for convenience of explanation with reference the relevant drawings and may vary depending on the position, arrangement, or rotation of the target object or the position of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the previously disclosed embodiments should be considered as those intended to describe the present disclosure, instead of those intended to limit the present disclosure. That is, the true scope of the technical idea of the present disclosure is shown in the claims, and all differences within the scope equivalent thereto should be construed as being included in the present disclosure.

### INDUSTRIAL APPLICABILITY

The present disclosure relates to a battery pack and a vehicle including the same, and is particularly applicable to industries related to secondary batteries.

## Claims

1. A battery pack comprising:
a plurality of battery modules in which a plurality of battery cells are stacked;
a pack case configured to store the plurality of battery modules and having a venting unit formed therein; and
a protective cover member coupled to the pack case at a portion where the venting unit is located to protect the venting unit and having a gas transfer hole through which venting gas moves.

2. The battery pack according to claim 1,
wherein the venting unit comprises:
a venting hole through which venting gas generated from the battery cells is discharged; and
a venting valve configured to close the venting hole and open when an internal pressure of the pack case exceeds a predetermined value.

3. The battery pack according to claim 1,
wherein the protective cover member is formed to cover at least a portion of the venting unit.

4. The battery pack according to claim 3,
wherein the protective cover member comprises:
an upper cover portion located at a top;
a side cover portion coupled to the upper cover portion and located at a side; and
a front cover portion coupled to the upper cover portion and the side cover portion, and
wherein the gas transfer hole is formed in at least one of the upper cover portion, the side cover portion, and the front cover portion.

5. The battery pack according to claim 4,
wherein the front cover portion comprises a plurality of rod portions, and
wherein the plurality of rod portions are coupled to the side cover portion so as to be inclined, so that the gas transfer hole is formed between the plurality of rod portions.

6. The battery pack according to claim 5,
wherein each of the plurality of rod portions has a lower side coupled to an end of the side cover portion and an upper side coupled to an inner side of the side cover portion.

7. The battery pack according to claim 6,
wherein the gas transfer hole is formed between one of the plurality of rod portions and a rod portion adjacent thereto so that the venting gas moves upward along the gas transfer hole.

8. The battery pack according to claim 5,
wherein each of the plurality of rod portions has an upper side coupled to an end of the side cover portion and a lower side coupled to an inner side of the side cover portion.

9. The battery pack according to claim 8,
wherein the gas transfer hole is formed between one of the plurality of rod portions and a rod portion adjacent thereto so that the venting gas moves downward along the gas transfer hole.

10. The battery pack according to claim 5,
wherein inclination angles of the plurality of rod portions are configured to be the same.

11. The battery pack according to claim 5,
wherein at least one inclination angle of the plurality of rod portions is configured differently.

12. The battery pack according to claim 4,
wherein a coupling portion is formed on the upper cover portion so that the protective cover member is coupled to the pack case.

13. The battery pack according to claim 4,
wherein the protective cover member further comprises a lower cover portion positioned at a lower portion so as to be coupled to lower portions of the side cover portion and the front cover portion.

14. The battery pack according to claim 13,
wherein a gas transfer hole through which venting gas moves is formed in the lower cover portion.

15. A vehicle comprising at least one battery pack according to any one of claims 1 to 14.
